# FASCICULE DE BREVET EUROPEEN

(11) **EP 2 294 034 B1**
(45) Date de publication et mention de la délivrance du brevet: **22.05.2019**
(21) Numéro de dépôt: 09772703.6
(22) Date de dépôt: 05.06.2009
(51) Int. Cl.: C04B 41/50, C04B 41/85, F02K 9/97, F16D 69/02, C04B 41/87, C04B 41/86, C03C 8/14, C03C 14/00

(54) **PROCEDE DE REALISATION D'UNE COUCHE AUTO-CICATRISANTE SUR UNE PIECE EN MATERIAU COMPOSITE C/C**
VERFAHREN ZUR HERSTELLUNG EINER SELBSTHEILENDEN SCHICHT AUF EINEM TEIL AUS EINEM C/C-VERBUNDWERKSTOFF
PROCESS FOR PRODUCING A SELF-HEALING LAYER ON A PART MADE OF A C/C COMPOSITE

(30) Priorité: 06.06.2008 FR 0853756
(43) Date de publication de la demande: 16.03.2011
(73) Titulaire: Snecma Propulsion Solide, 33187 Le Haillan Cedex (FR)
(72) Inventeur: DISS, Pascal, F-33185 Le Haillan (FR); LAVASSERIE, Eric, F-33130 Begles (FR)
(74) Mandataire: Laïk, Eric
(86) Numéro de dépôt international: PCT/FR2009/051065
(87) Numéro de publication internationale: WO 2010/001021

(56) Documents cités:
- EP-A- 0 609 160
- WO-A1-88/03519
- FR-A- 2 838 071

## Description

### Arrière-plan de l'invention

L'invention concerne l'application d'un revêtement de protection contre l'oxydation sur des pièces en matériaux composites thermostructuraux contenant du carbone.

Les matériaux composites thermostructuraux sont caractérisés par leurs propriétés mécaniques qui les rendent aptes à constituer des pièces de structure et par leur capacité à conserver ces propriétés mécaniques à des températures élevées. Ils sont constitués par un renfort fibreux densifié par une matrice en matériau réfractaire qui comble au moins partiellement la porosité du renfort fibreux. Les matériaux constitutifs du renfort fibreux et de la matrice sont typiquement choisis parmi le carbone et les céramiques. Des exemples de matériaux composites thermostructuraux sont les composites carbone/carbone (C/C) et les composites à matrice céramique (CMC) tels que C/SiC (renfort en fibres de carbone et matrice carbure de silicium) ou C/C-SiC (renfort en fibres de carbone et matrice mixte carbone-carbure de silicium), ou encore C/C-SiC-Si (composite C/C siliciuré par réaction avec Si).

Les matériaux composites thermostructuraux contiennent très fréquemment du carbone, que ce soit comme constituant des fibres, constituant au moins partiel de la matrice, ou encore constituant d'une couche d'interphase formée sur les fibres pour assurer une liaison adéquate avec la matrice. Aussi, une protection contre l'oxydation est indispensable pour éviter une rapide détérioration de pièces formées de tels matériaux composites, lorsque ces pièces sont utilisées en atmosphère oxydante à une température supérieure à 350°C.

Il existe une abondante littérature concernant la formation de revêtements de protection anti-oxydation pour des pièces formées au moins en partie de carbone ou de graphite.

Dans le cas de pièces en matériaux composites thermostructuraux contenant du carbone, notamment les composites C/C, il est connu de former un revêtement de protection au moins en partie par une composition contenant du bore, et plus particulièrement une composition ayant des propriétés auto-cicatrisantes. Par composition auto-cicatrisante, on entend une composition qui, par passage à l'état visqueux à la température d'utilisation des pièces, peut colmater des fissures qui sont susceptibles de se former dans le revêtement ou couche de protection. Sinon, en atmosphère oxydante, de telles fissures offriraient un accès à l'oxygène du milieu ambiant pour atteindre le matériau composite et s'infiltrer dans la porosité résiduelle de celui-ci. Des compositions auto-cicatrisantes couramment utilisées sont des verres borés, notamment des verres borosilicates. On pourra se référer par exemple au document US 4 613 522.

L'oxyde B₂O₃ est l'élément essentiel des compositions de protection borées. Il possède une température de fusion relativement basse (environ 450°C) et sa présence permet d'assurer une mouillabilité correcte de la surface carbonée à protéger. Lorsque les conditions d'utilisation imposent l'emploi de mélanges vitreux auto-cicatrisants spécifiques, formulés de manière à posséder une viscosité adaptée à la plage de température visée, la combinaison de ces mélanges avec B₂O₃ est incontournable pour assurer la formation d'un film protecteur continu à la surface du substrat.

Selon les conditions d'utilisation, B₂O₃ peut se volatiliser, soit progressivement à partir de 500°C (notamment en atmosphère humide), soit plus rapidement aux températures supérieures. Au delà de 1100°C, cette volatilisation devient si rapide, que l'efficacité des mélanges protecteurs en présence disparaît, même pour des utilisations de très courte durée, suite à la perte de mouillabilité.

Un moyen de retarder la disparition complète de B₂O₃ consiste à rajouter dans la protection, des borures métalliques, capables de reformer progressivement du B₂O₃ par oxydation, au fur et à mesure de sa volatilisation. Le document US 5 420 084 décrit un revêtement de protection permettant de protéger notamment des pièces en matériau composite C/C contre l'oxydation jusqu'à 1350°C, le revêtement de protection étant formé par un mélange de diborure de zirconium ZrB₂ et de silice colloïdale SiO₂.

Il est également connu du document US 6 740 408 un procédé de réalisation d'un revêtement de protection de pièces en matériau composite C/C. Ce procédé comprend la formation, sur les pièces, d'un revêtement contenant un mélange d'une poudre de borure constituée majoritairement par du diborure de titane TiB₂, par une poudre d'oxyde réfractaire ayant des propriétés cicatrisantes par formation d'un verre silicaté et contenant majoritairement un mélange borosilicaté (telle qu'une poudre d'un mélange SiO₂-B₂O₃), et par un liant constitué par une résine précurseur de céramique réfractaire (par exemple une résine choisie parmi: polycarbosilanes (PCS), précurseurs de carbure de silicium SiC; polytitanocarbosilanes (PCTS)), le précurseur étant ensuite transformé en céramique. Le diborure de titane TiB₂ constitue un régénérateur de B₂O₃. En effet, le diborure de titane TiB₂ constitue un régénérateur de B₂O₃, puisque, suite à son oxydation progressive à partir de 550°C, et plus rapide à partir de 1100°C, TiB₂ vient compenser la disparition de B₂O₃ en engendrant B₂O₃ + TiO₂. L'oxyde TiO₂ est dispersé dans les oxydes du verre silicaté et contribue à en augmenter la viscosité tout en maintenant son pouvoir cicatrisant. La couche de protection ainsi obtenue offre de ce fait une protection effective et durable contre l'oxydation pour des pièces en composite C/C utilisées en environnement humide à haute température.

Toutefois, l'efficacité de la protection des revêtements connus ayant des propriétés auto-cicatrisantes n'est plus assurée pour des températures supérieures 1450°C environ, et ce même avec des revêtements contenant des régénérateurs de B₂O₃ tels que le diborure de titane TiB₂ ou le diborure de zirconium ZrB₂. En effet, au-delà de 1450°C, on observe une volatilisation complète de l'oxyde B₂O₃, y compris celui obtenu par régénération. Dans ces conditions, il n'est plus possible de former un film protecteur continu à la surface de la pièce notamment en raison d'une mouillabilité insuffisante du carbone. La perte d'efficacité de la protection à de telles températures est d'autant plus importante que la durée d'exposition de la pièce est longue.

S'il est relativement aisé de concevoir des mélanges vitreux aptes à ramollir à des températures supérieures à 1450°C afin de jouer un rôle cicatrisant, l'utilisation de ces mélanges en l'état est malheureusement impossible en raison de l'absence de B₂O₃ à de tels niveaux de température, ce qui conduit à une perte de la mouillabilité du système protecteur.

La solution généralement adoptée dans un tel cas consiste à appliquer le mélange protecteur sur une surface de carbure de silicium (SiC) au lieu d'une surface de carbone. Cela nécessite la mise en forme d'une sous-couche d'accrochage de SiC obtenue soit par voie réactive en faisant réagir chimiquement du silicium avec la surface de carbone à protéger (T<1400°C, atmosphère d'argon), soit par infiltration chimique en phase vapeur.

La réalisation d'une telle sous-couche constitue donc une étape supplémentaire dans la mise en forme du revêtement protecteur, étape en outre très complexe au vu des conditions opératoires à respecter.

On connait par ailleurs EP 0 609 160 qui divulgue un revêtement de protection contre les réactions avec l'atmosphère à haute température. WO 8803519 décrit également un revêtement en céramique. Or, il existe un besoin de protection pour des pièces utilisées en environnement oxydant à des températures supérieures à 1450°C.

Il en est ainsi notamment pour des divergents de tuyères de moteurs fusées à hydrogène et oxygène, la vapeur d'eau produite et éjectée à travers la tuyère créant un environnement humide et oxydant.

Il en est ainsi également pour des disques de frein en composite C/C tels qu'utilisés en aéronautique, lorsque l'atterrissage et le roulage au sol se font sur des pistes humides.

### Objet et résumé de l'invention

L'invention a pour but de fournir un procédé permettant la réalisation avec une seule étape de mise en forme d'une couche auto-cicatrisante sur une pièce en matériau composite qui présente une efficacité élevée, en particulier à des températures supérieures à 1450°C. Ce but est atteint grâce à un procédé selon la revendication 1.

Comme expliqué ci-après, une telle composition permet de former un revêtement de protection comprenant deux phases auto-cicatrisantes: une première phase apportant une protection contre l'oxydation à des températures inférieures à 1450°C et une deuxième phase apportant une protection contre l'oxydation à des températures supérieures à 1450°C. En outre, les grains de carbure de silicium permettent de former avec la deuxième phase auto-cicatrisante un film protecteur continu à la surface de la pièce. Par conséquent, la composition de la présente invention, offre une protection contre l'oxydation efficace même à des températures supérieures à 1450°, et ce malgré, d'une part, la disparition du bore à ces niveaux de températures et, d'autre part, l'absence de sous-couche de SiC.

La composition peut contenir en outre du silicium sous forme de poudre permettant de piéger l'oxygène et de former de la silice supplémentaire.

Outre le bore et la silice déjà présents, la composition peut contenir un mélange borosilicaté sous forme de poudre.

Un oxyde modificateur de verre peut être également ajouté afin d'adapter la température de formation du verre protecteur.

Le séchage de la composition appliquée est réalisé de préférence à 90°C à l'air pendant une heure environ.

Avantageusement, on applique sur la pièce une composition présentant, après séchage, une couche ayant une épaisseur comprise entre 50 et 250 µm et une masse surfacique comprise entre 15 et 60 mg/cm².

Avantageusement encore, la composition est appliquée en plusieurs couches successives, avec séchage intermédiaire.

De façon optionnelle, le procédé peut comprendre en outre, après l'application de la composition, l'application d'une couche de résine carbonée ou pré-céramique suivie de la polymérisation de ladite résine, ou la réalisation d'un traitement thermique de nappage-vitrification réalisé à une température comprise entre 600°C et 1000°C en atmosphère neutre. Cela ne modifie pas l'efficacité de la protection par rapport à un séchage à 90°C mais permet de protéger la composition vis-à-vis d'éventuels chocs, frottements, etc.

Le brevet décrit encore une pièce en matériau composite munie d'une couche auto-cicatrisante telle qu'obtenue par le procédé de l'invention et comprenant une première phase auto-cicatrisante formée majoritairement par un système borosilicate, une deuxième phase auto-cicatrisante silicatée et une charge formée de grains de carbure de silicium, la deuxième phase auto-cicatrisante silicatée comprenant au moins un oxyde ultra-réfractaire.

Le couche auto-cicatrisante peut comprendre en outre un ou plusieurs des constituants suivants: du silicium sous forme de poudre, un mélange borosilicaté sous forme de poudre, et au moins un oxyde modificateur de verre.

La pièce peut comprendre en outre une couche superficielle de protection mécanique sur le revêtement de protection contre l'oxydation.

La pièce peut être notamment une pièce de friction en composite C/C ou un divergent de tuyère de moteur-fusée.

### Brève description des dessins

L'invention sera mieux comprise à la lecture de la description détaillée faite ci-après, à titre indicatif mais non limitatif. Il sera fait référence aux dessins annexés sur lesquels :
- la Figure 1 montre des étapes successives de formation d'une couche auto-cicatrisante selon un mode de réalisation de l'invention;
- la Figure 2 illustre schématiquement la fonction des grains de SiC présents dans la couche auto-cicatrisante de l'invention; et
- les Figures 3 à 5 montrent des courbes qui illustrent la tenue de revêtements de protection obtenus conformément à l'invention en atmosphère oxydante à des températures de 1500°C.

### Description détaillée de modes de réalisation

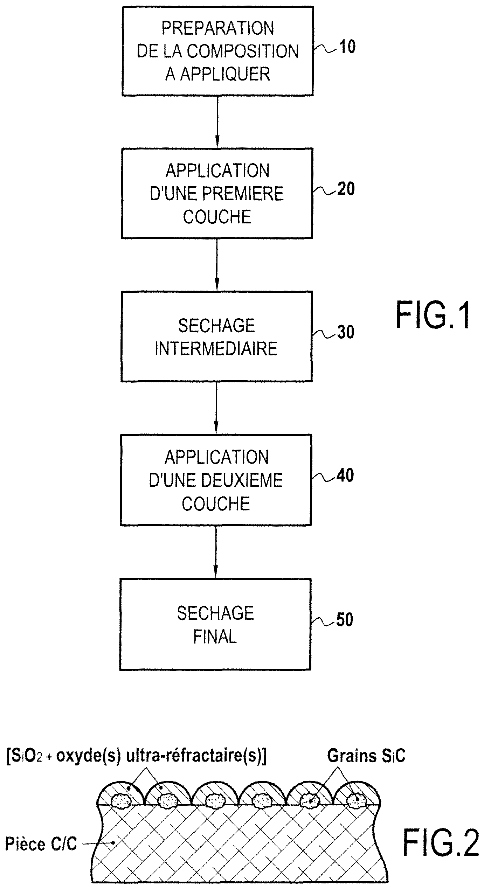

L'invention sera décrite ci-après en relation avec la figure 1 et dans le cadre de son application à la protection contre l'oxydation de pièces en matériau composite C/C. L'invention trouve une application particulière dans la protection de pièces en matériau composite C/C destinées à être exposées à de hautes températures comme c'est le cas notamment pour des divergents de tuyères de moteurs fusées et des pièces de friction tels que des disques de frein d'avions.

Toutefois, comme déjà indiqué, l'invention peut être appliquée à tous matériaux composites thermostructuraux contenant du carbone, et notamment des CMC à renfort fibreux en carbone ou présentant une interphase en carbone entre les fibres du renfort et la matrice céramique, par exemple SiC.

Une première étape 10 du procédé consiste à préparer la composition à appliquer à la surface de la pièce à protéger.

La composition comporte en pourcentages massiques :
- entre 30% et 70% d'une suspension aqueuse de silice colloïdale telle que le produit Ludox® AS40 de la société GRACE Davison,
- entre 5% et 60% d'une poudre de bore et/ou d'une poudre d'un composé de bore choisi notamment parmi les diborures métalliques (TiB₂, ZrB₂, etc.) ou les oxydes de bore (B₂O₃, etc.),
- entre 15% et 40% de poudre de carbure de silicium,
- entre 1% et 10% d'un ou plusieurs oxydes ultra-réfractaires (Y₂O₃, HfO₂, AL₂O₃, ZrO₂, etc.),
- éventuellement entre 5% et 15% de poudre de silicium,
- éventuellement entre 5% et 20% sous forme finement divisée (poudre) d'un constituant d'un verre borosilicaté comprenant majoritairement de l'oxyde de bore et de l'oxyde de silicium,
- éventuellement entre 1% et 10% d'un ou plusieurs oxydes modificateurs de verre sous forme de poudre.

La suspension aqueuse de silice colloïdale fait fonction de liant pour les autres constituants de la composition qui sont sous forme de poudre.

La composition, de préférence après homogénéisation par agitation, forme une barbotine qui est appliquée sur la surface de la pièce à protéger, l'application étant réalisée par exemple par enduction au pinceau ou pistolettage (projection). Après son application, la composition est séchée dans une étuve. L'application peut être réalisée en plusieurs couches successives, par exemple en deux couches (étapes 20 et 40) avec des étapes de séchage après chaque application (étapes 30 et 50).

La quantité totale de composition déposée est de préférence comprise entre 15 mg/cm² et 60 mg/cm², après séchage à l'étuve, de manière à obtenir un revêtement ayant une épaisseur comprise entre 50 µm et 250 µm.

Le séchage de la suspension colloïdale permet de former un solide coagulé qui assure la cohésion des grains de poudre des autres constituants de la composition et l'accrochage de la couche de protection sur la pièce. Le séchage intermédiaire, avant dépôt d'une couche suivante, favorise une bonne homogénéité du revêtement globalement formé.

Le séchage est réalisé à l'air à une température d'environ 90°C pendant une heure.

Après formation de la couche de protection proprement dite, celle-ci peut être recouverte d'une résine qui est ensuite réticulée par un traitement thermique réalisé à une température fonction de la nature de la résine. La résine peut être notamment une résine carbonée, par exemple une résine phénolique, ou une résine précurseur de céramique, par exemple une résine polycarbosilane (PCS) ou polysiloxane. Le dépôt et la réticulation de la résine permettent de former une couche superficielle de protection et de renforcer ainsi la tenue de la couche de protection vis-à-vis des chocs mécaniques, des frottements, de l'érosion, etc.

De même, la tenue de la couche de protection peut être renforcée en réalisant un traitement thermique de nappage-vitrification de la couche à une température comprise entre 600°C et 1000°C en atmosphère neutre.

Après séchage de la composition et éventuellement après réticulation de la résine ou nappage-vitrification, on obtient une pièce munie d'une couche de protection auto-cicatrisante comprenant au moins des particules de silice provenant de la suspension colloïdale, de la poudre de bore et/ou d'un composé de bore, de la poudre de carbure de silicium, et de la poudre d'au moins un oxyde ultra-réfractaire. Comme expliqué ci-après, ces constituants permettent de former un revêtement de protection comprenant une première phase auto-cicatrisante formée majoritairement par un système borosilicate, une deuxième phase auto-cicatrisante silicatée comprenant au moins un oxyde ultra-réfractaire et une charge formée de grains de carbure de silicium.

On notera que, selon l'application envisagée, la composition peut être appliquée sur tout ou partie de la surface extérieure d'une pièce. Par exemple, dans le cas de disques de frein, la composition peut être appliquée seulement sur les surfaces autres que la ou les surfaces frottantes et, dans le cas de divergents de tuyères de propulseurs, la composition peut n'être appliquée que sur la surface interne du divergent.

On entend par oxyde "ultra-réfractaire", un oxyde ayant une température de fusion supérieure à 2000°C.

La silice colloïdale utilisée sous forme d'une dispersion aqueuse fait fonction de liant pour la composition et permet de répartir sensiblement uniformément les grains des différentes poudres. Toutefois, la silice participe également à la fonction de protection de la pièce (cicatrisation et barrière de diffusion) car elle se combine aux autres espèces verrières de la composition pour former à l'état ramolli une barrière de diffusion. Plus précisément, à des températures inférieures à 1450°C environ, la silice forme avec le bore un verre auto-cicatrisant borosilicaté de type [B₂O₃ + SiO₂] qui mouille le carbone et forme ainsi une barrière de diffusion. En outre, à des températures supérieures à 1450°C, la silice forme avec le ou les oxyde(s) ultra-réfractaire(s) un verre auto-cicatrisant de type [SiO₂ + oxyde(s) ultra-réfractaire(s)] qui mouille les grains de carbure de silicium.

Le bore (bore élémentaire ou composé de bore) assure la mouillabilité du carbone et participe à la formation du verre auto-cicatrisant à des températures inférieures à 1450°C.

La poudre de SiC assure la formation d'un film protecteur continu à la surface de la pièce à protéger aux hautes températures, c'est-à-dire à des températures supérieures à 1450°C. En effet, comme expliqué précédemment, à partir de ces températures, le bore présent dans la couche de protection a été entièrement consommé, ce qui a pour conséquence la disparition de l'oxyde protecteur B₂O₃ et de l'agent mouillant du carbone. Dans ces conditions, il n'est plus possible de former un film protecteur continu à la surface de la pièce notamment en raison d'une mouillabilité insuffisante du carbone. Comme représentés schématiquement sur la figure 2, les grains de SiC permettent de pallier cette perte de mouillabilité du carbone car le verre auto-cicatrisant formé à ces températures ([SiO₂ + oxyde(s) ultra-réfractaire(s)]) mouille les grains de SiC présents à la surface de la pièce à protéger, ces grains étant eux-mêmes maintenus par ancrage mécanique dans les porosités de surface de la pièce. Le verre à l'état ramolli se répartit sous forme de gouttes autour des grains de SiC. La taille et la proximité des grains de SiC présents à la surface de la pièce permettent de maintenir les gouttes de verre en contact les unes des autres et de former ainsi un film protecteur continu à la surface de la pièce.

La granulométrie moyenne de la poudre de SiC est déterminée en fonction de la taille moyenne de la macroporosité de la pièce à protéger. En effet, afin d'assurer un bon ancrage des grains de SiC dans la macroporosité, ceux-ci ne doivent pas avoir une taille trop importante. En outre, les grains de SiC ne doivent pas non plus avoir une taille trop réduite afin de ne pas subir une oxydation trop rapide (transformation du SiC en silice) pouvant entraîner une discontinuité du film protecteur à la surface de la pièce. La taille minimale des grains de SiC est en outre limitée afin de ne pas trop augmenter la viscosité de la composition à appliquer. A titre d'exemple, la granulométrie moyenne de la poudre de SiC peut être comprise entre 5 µm et 50 µm.

Le ou les oxydes ultra-réfractaires permettent, en se combinant avec la silice présente dans la couche de protection, de former un verre auto-cicatrisant ayant une température de ramollissement autour de 1450°C. On forme ainsi une composition verrière auto-cicatrisante ayant une viscosité adaptée pour former une barrière de diffusion à des températures où l'efficacité protectrice du verre borosilicaté n'est plus assurée.

La couche de protection peut comprendre en outre du silicium sous forme de poudre qui constitue un piège à oxygène et un générateur de silice.

La couche de protection peut encore contenir un précurseur de verre auto-cicatrisant borosilicaté qui participe, en outre de la silice et du bore déjà présents dans la couche de protection, à la fonction de protection de la pièce pour des températures inférieures à 1450°C.

Enfin, la couche de protection peut comprendre, outre les oxydes de bore et de silicium, un ou plusieurs oxydes permettant de régler la plage de température dans laquelle le verre borosilicaté présente un comportement visqueux pour réaliser la fonction de protection (cicatrisation et barrière de diffusion). On pourra notamment utiliser des oxydes modificateurs de verre tels que des oxydes d'éléments alcalins: Na₂O, K₂O, des oxydes de baryum BaO ou de calcium CaO ou de magnésium MgO, de la zircone ZrO₂, de l'alumine Al₂O₃, du monoxyde de plomb PbO , un oxyde de fer,...

Un exemple de verre borosilicaté modifié est constitué par une poudre de verre "PYREX" de la société des Etats-Unis d'Amérique "CORNING" dont la composition est principalement (en pourcentages massiques) :

| | |
|---|---|
| SiO₂ | 80,60% |
| B₂O₃ | 12,60% |
| Na₂O | 4,2% |
| Al₂O₃ | 2,25% |
| Cl | 0,1% |
| CaO | 0,1% |
| MgO | 0,05% |
| Fe₂O₃ | 0,04% |

Essais (les compositions B et I sont hors de l'invention)

Afin de vérifier l'efficacité d'une couche auto-cicatrisante selon l'invention, des échantillons de composite C/C ont été munis d'une couche auto-cicatrisante dans les conditions suivantes et testés à température élevée (1500°C).

Les échantillons sont des blocs en composite C/C formé d'un renfort en fibres de carbone densifié par une matrice de carbone pyrolytique obtenue par infiltration chimique en phase gazeuse.

Les compositions suivantes ont été réalisées (proportions indiquées en pourcentages massiques):

| Composition | **A** | **B** | **C** | **D** | **E** | **F** | **G** | **H** | **I** |
|---|---|---|---|---|---|---|---|---|---|
| Silice (Ludox® AS40) | 49,1% | 63,5% | 45,6% | 45,6% | 45,6% | 45,6% | 49,1% | 49,1% | 38,2% |
| Poudre de Bore | 7,5% | 9,7% | 7% | 7% | 7% | 7% | 7,5% | 7,5% | 48,9% (TiB₂) |
| Poudre de Silicium | 7,5% | 9,7% | 7% | 7% | 7% | 7% | 7,5% | 7,5% | |
| Poudre de SiC (7µm) | | | | | | 28,1% | | | |
| Poudre de SiC (9 µm) | 22,6% | | 28,1% | | | | 22,6% | 22,6% | |
| Poudre de SiC (37 µm) | | | | 28,1% | | | | | |
| Poudre de SiC (45 µm) | | | | | 28,1% | | | | |
| Poudre de Y₂O₃ | 5,8% | 7,4% | 5,3% | 5,3% | 5,3% | 5,3% | | | |
| Poudre de HfO₂ | | | | | | | 5,8% | | |
| Poudre de Al₂O₃ | | | | | | | | 5,8% | |
| Poudre de Pyrex | 7,5% | 9,7% | 7% | 7% | 7% | 7% | 7,5% | 7,5% | 12,8% |
| Masse surfacique (en mg/cm2) | 43 | 41 | 47 | 53 | 44 | 43 | 51 | 49 | 47 |
| Perte de masse après oxydation pendant 1 heure à l'air à 1500°C | 0% | -3,6% | 1,3% | 1,1% | 1,1% | 1,2% | -5,7% | -3,5% | -14% |

Toutes les compositions ont été appliquées sur les pièces au pinceau, en deux couches successives et sans traitement supplémentaire après le séchage à 90°C. On notera que les performances indiquées ci-après ne sont pas modifiées en cas de traitement supplémentaire (revêtement résine réticulée ou nappage).

### Essai 1

Dans cet exemple, de mêmes échantillons en composite C/C ont été munis de couches auto-cicatrisantes. Chaque échantillon E_{A}, E_{B}, E_{C}, E_{D}, E_{E} et E_{F} a été protégé par un revêtement différent obtenu respectivement par application des compositions A, B, C, D, E et F indiquées précédemment. Toutes les compositions ont été appliquées suivant les conditions indiquées précédemment.

On notera que contrairement aux échantillons E_{A}, E_{C}, E_{D}, E_{E} et E_{F}, le revêtement de protection de l'échantillon E_{B} ne contient pas de poudre de SiC.

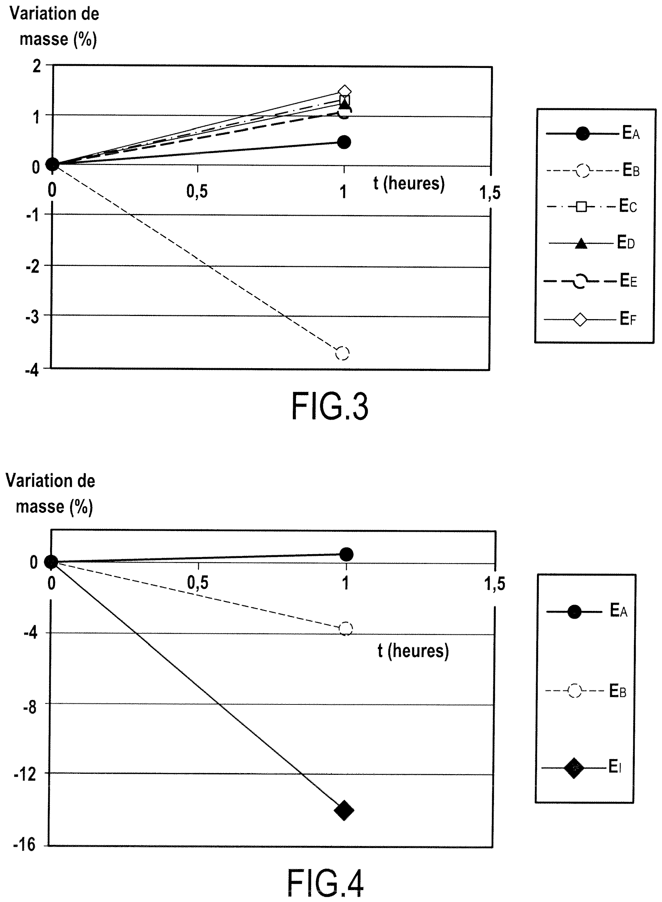

La figure 3 montre la variation de masse relative mesurée après une heure d'exposition à 1500°C sous air sec.

Bien que tous les revêtements des échantillons testés contiennent les compositions verrières requises pour assurer une protection à 1500°C, on constate que seul l'échantillon E_{B} subit une perte de masse.

Cet essai montre l'intérêt de la poudre de SiC pour réaliser la formation d'un film protecteur continu au-delà de 1450°C.

### Essai 2

Dans cet exemple, de mêmes échantillons en composite C/C ont été munis de couches auto-cicatrisantes. Chaque échantillon E_{A}, E_{B}, et E_{I} a été protégé par un revêtement différent obtenu respectivement par application des compositions A, B, et I indiquées précédemment. Toutes les compositions ont été appliquées suivant les conditions indiquées précédemment.

On notera que contrairement à l'échantillon E_{A}, le revêtement de protection de l'échantillon E_{B} ne contient pas de poudre de SiC et le revêtement de protection de l'échantillon E_{I} ne contient pas de poudre de SiC, ni d'oxyde ultra-réfractaire.

La figure 4 montre la variation de masse relative mesurée après une heure d'exposition à 1500°C sous air sec.

On constate que la perte de masse est encore bien plus importante pour l'échantillon E_{I} que pour l'échantillon E_{B}.

Cet essai montre l'intérêt des oxydes ultra-réfractaires dans l'adaptation de la composition verrière à la température d'efficacité visée.

### Essai 3

Dans cet exemple, de mêmes échantillons en composite C/C ont été munis de couches auto-cicatrisantes. Chaque échantillon E_{F}, E_{G}, et E_{H} a été protégé par un revêtement différent obtenu respectivement par application des compositions F, G, et H indiquées précédemment. Toutes les compositions ont été appliquées suivant les conditions indiquées précédemment.

On notera que les revêtements de protection des échantillons contiennent tous des grains de SiC mais diffèrent en ce qu'ils contiennent des oxydes ultra-réfractaires différents, à savoir Y₂O₃ pour l'échantillon E_{F}, HfO₂ pour l'échantillon E_{G}, et Al₂O₃ pour l'échantillon E_{H}.

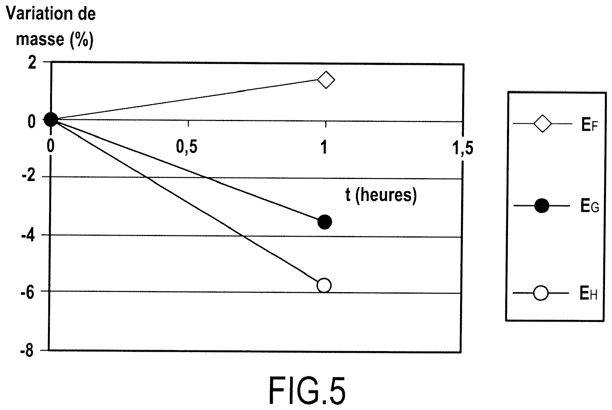

La figure 5 montre la variation de masse relative mesurée après une heure d'exposition à 1500°C sous air sec.

On constate qu'il y a une perte de masse pour les échantillons E_{G} et E_{H}.

Cet essai montre que la protection contre l'oxydation à 1500°C est plus efficace avec du Y₂O₃ qu'avec du HfO₂ et du Al₂O₃.

## Revendications

1. Procédé de réalisation d'une couche auto-cicatrisante sur une pièce contenant du carbone, ledit procédé comprenant l'application sur la pièce d'une composition contenant en pourcentages massiques entre 5% et 60% d'une poudre de bore ou d'une poudre d'un composé de bore, et entre 15% et 40% de poudre de carbure de silicium,
le procédé étant **caractérisé en ce que** la pièce est en matériau composite, et **en ce que** la composition contient en outre en pourcentages massiques:
- entre 30% et 70% d'une suspension aqueuse de silice colloïdale, et
- entre 1% et 10% d'au moins un oxyde ultra-réfractaire ayant une température de fusion supérieure à 2000°C.

2. Procédé selon la revendication 1, **caractérisé en ce que** la composition contient en outre du silicium sous forme de poudre.

3. Procédé selon la revendication 1 ou 2, **caractérisé en ce que** la composition contient en outre un mélange borosilicaté sous forme de poudre.

4. Procédé selon l'une quelconque des revendications 1 à 3, **caractérisé en ce que** la composition contient en outre au moins un oxyde modificateur de verre lequel est configuré pour adapter la température de formation d'un verre protecteur.

5. Procédé selon l'une quelconque des revendications 1 à 4, **caractérisé en ce que** la poudre de carbure de silicium présente une granulométrie moyenne comprise entre 5 µm et 50 µm.

6. Procédé selon l'une quelconque des revendications 1 à 5, **caractérisé en ce qu'**il comprend en outre une étape de séchage de la composition appliquée.

7. Procédé selon l'une quelconque des revendications 1 à 6, **caractérisé en ce qu'**on applique sur la pièce une composition présentant, après séchage, une couche ayant une épaisseur comprise entre 50 µm et 250 µm et une masse surfacique comprise entre 15 et 60 mg/cm².

8. Procédé selon l'une quelconque des revendications 1 à 6, **caractérisé en ce que** la composition est appliquée sur la pièce en plusieurs couches successives, avec séchage intermédiaire.

9. Procédé selon l'une quelconque des revendications 1 à 8, **caractérisé en ce qu'**il comprend en outre, après l'application de la composition, l'application d'une couche de résine carbonée ou pré-céramique et la polymérisation de ladite résine.

10. Procédé selon l'une quelconque des revendications 1 à 8, **caractérisé en ce qu'**il comprend en outre, après l'application de la composition, la réalisation d'un traitement thermique de nappage-vitrification réalisé à une température comprise entre 600°C et 1000°C en atmosphère neutre.

## Patentansprüche

1. Verfahren zur Herstellung einer selbstheilenden Schicht auf einem Kohlenstoff enthaltenden Teil, wobei das Verfahren das Aufbringen einer Zusammensetzung auf das Teil umfasst, die in Massenprozentanteilen zwischen 5 % und 60 % eines Borpulvers oder eines Pulvers einer Borverbindung und zwischen 15 % und 40 % Siliziumkarbidpulver enthält,
wobei das Verfahren **dadurch gekennzeichnet ist, dass** das Teil aus Verbundmaterial besteht und dass die Zusammensetzung ferner in Massenprozentanteilen enthält:
- zwischen 30 % und 70 % einer wässrigen Suspension von Kieselgel und
- zwischen 1 % und 10 % zumindest eines hochhitzefesten Oxids mit einer Schmelztemperatur von über 2000 °C.

2. Verfahren nach Anspruch 1, **dadurch gekennzeichnet, dass** die Zusammensetzung ferner Silizium in Pulverform enthält.

3. Verfahren nach Anspruch 1 oder 2, **dadurch gekennzeichnet, dass** die Zusammensetzung ferner eine Borosilikatmischung in Pulverform enthält.

4. Verfahren nach einem der Ansprüche 1 bis 3, **dadurch gekennzeichnet, dass** die Zusammensetzung ferner zumindest ein glasmodifizierendes Oxid enthält, das dazu ausgestaltet ist, die Bildungstemperatur einer Schutzglasur anzupassen.

5. Verfahren nach einem der Ansprüche 1 bis 4, **dadurch gekennzeichnet, dass** das Siliziumkarbidpulver eine mittlere Korngröße zwischen 5 µm und 50 µm aufweist.

6. Verfahren nach einem der Ansprüche 1 bis 5, **dadurch gekennzeichnet, dass** es ferner einen Schritt der Trocknung der aufgebrachten Zusammensetzung umfasst.

7. Verfahren nach einem der Ansprüche 1 bis 6, **dadurch gekennzeichnet, dass** auf das Teil eine Zusammensetzung aufgebracht wird, die nach der Trocknung eine Schicht mit einer Dicke zwischen 50 µm und 250 µm und einer flächenbezogenen Masse zwischen 15 und 60 mg/cm² aufweist.

8. Verfahren nach einem der Ansprüche 1 bis 6, **dadurch gekennzeichnet, dass** die Zusammensetzung in mehreren aufeinanderfolgenden Schichten mit dazwischen erfolgender Trocknung auf das Teil aufgebracht wird.

9. Verfahren nach einem der Ansprüche 1 bis 8, **dadurch gekennzeichnet, dass** es ferner nach dem Aufbringen der Zusammensetzung das Aufbringen einer Schicht aus kohlenstoffhaltigem Harz oder Keramikvorläufermaterial und die Polymerisation des Harzes umfasst.

10. Verfahren nach einem der Ansprüche 1 bis 8, **dadurch gekennzeichnet, dass** es ferner nach dem Aufbringen der Zusammensetzung die Durchführung einer thermischen Behandlung zur Überzugs-Glasurbildung umfasst, die bei einer Temperatur zwischen 600 °C und 1000 °C in neutraler Atmosphäre durchgeführt wird.

## Claims

1. A method of making a self-healing layer on a part comprising carbon, said method comprises applying on the part a composition containing in percentages by weight 5% to 60% of a boron powder and/or of a powder of a boron compound, and 15% to 40% of silicon carbide powder,
the method being **characterized in that** the part is in composite material, and **in that** the composition further contains in percentages by weight:
• 30% to 70% of an aqueous suspension of colloidal silica, and
• 1% to 10% of one or more ultra-refractory oxides having a melting temperature higher than 2000°C.

2. A method according to claim 1, **characterized in that** the composition also contains silicon in powder form.

3. A method according to claim 1 or claim 2, **characterized in that** the composition also contains a borosilicate mixture in powder form.

4. A method according to any one of claims 1 to 3, **characterized in that** the composition also contains at least one glass-modifier oxide which is configured to adapt the temperature of formation of a protective glass.

5. A method according to any one of claims 1 to 4, **characterized in that** the silicon carbide powder presents mean grain size lying in the range 5 µm to 50 µm.

6. A method according to any one of claims 1 to 5, **characterized in that** it further comprises a step of drying the applied composition.

7. A method according to any one of claims 1 to 6, **characterized in that** a composition is applied on the part, which composition presents, after drying, a layer having a mean thickness lying in the range 50 µm to 250 µm and a surface mass lying in the range 15 mg/cm² to 60 mg/cm².

8. A method according to any one of claims 1 to 6, **characterized in that** the composition is applied to the part as a plurality of successive layers, with intermediate drying.

9. A method according to any one of claims 1 to 8, **characterized in that** it further comprises, after applying the composition, applying a layer of a carbon resin or a ceramic-precursor resin, and polymerizing said resin.

10. A method according to any one of claims 1 to 8, **characterized in that** it further comprises, after applying the composition, performing lapping-vitrification heat treatment at a temperature lying in the range 600°C to 1000°C in an inert atmosphere.
